# FASCICULE DE BREVET EUROPEEN

(11) **EP 0 736 146 B1**
(45) Date de publication et mention de la délivrance du brevet: **15.12.1999**
(21) Numéro de dépôt: 95936605.5
(22) Date de dépôt: 24.10.1995
(51) Int. Cl.: F16D 23/14

(54) **BUTEE DE DEBRAYAGE**
KUPPLUNGSAUSRÜCKLAGER
CLUTCH RELEASE BEARING

(30) Priorité: 24.10.1994 FR 9412669
(43) Date de publication de la demande: 09.10.1996
(73) Titulaire: VALEO, 75017 Paris (FR)
(72) Inventeur: KROMWEL, Jean-Michel, F-80000 Amiens (FR); DESQUESNES, Laurent, F-80800 Fouilloy (FR)
(74) Mandataire: Gamonal, Didier
(86) Numéro de dépôt international: FR9501411
(87) Numéro de publication internationale: WO9612899

(56) Documents cités:
- EP-A- 0 047 584
- EP-A- 0 164 947
- EP-A- 0 321 757
- WO-A-89/02991
- DE-A- 3 540 225
- DE-A- 3 810 369
- GB-A- 2 162 276
- US-A- 4 364 615

## Description

La présente invention propose une butée de débrayage, notamment destinée à agir sur le dispositif débrayeur d'un embrayage de véhicule automobile. Une butée de débrayage comprend en particulier un élément de centrage du type roulement à billes, sur lequel appuie un élément de manoeuvre, usuellement en matière synthétique telle que de la matière plastique, actionné par une fourchette de commande, telle qu'une fourchette de débrayage.

Afin d'assurer l'autocentrage de la butée, le roulement à billes doit pouvoir disposer, dans un plan perpendiculaire à son axe, d'une latitude de déplacement omnidirectionnelle par rapport à l'élément de manoeuvre. Le déplacement radial de la butée est, de manière connue, contrôlé par un serrage à friction entre le roulement à billes et l'élément de manoeuvre.

Le serrage à friction est obtenu par un contact direct métal contre matière synthétique, par exemple du type polyamide chargé en fibres de verre, afin d'obtenir des caractéristiques de frottement voulues.

Cependant, la pression due à la poussée de l'élément de manoeuvre et la chaleur dégagée par le frottement provoquent un fluage de la matière synthétique. Il se forme ainsi sur la face de poussée une butée de matière synthétique qui bloque le déplacement du roulement à billes par rapport à l'élément de manoeuvre. Il en résulte du bruit et des problèmes d'autocentrage.

Pour pallier ces inconvénients, la présente invention propose une butée de débrayage comportant un élément de manoeuvre en matière synthétique, présentant une face de poussée en regard d'une bague fixe d'un roulement à billes, et une plaque d'appui mince immobilisée sur ladite face de poussée entre ladite bague du roulement à billes et ledit élément de manoeuvre, caractérisé en ce que ladite plaque d'appui présente des pattes à sa périphérie externe suffisamment flexibles pour se plier et se bloquer contre l'élément de manoeuvre.

Grâce à l'invention, la plaque d'appui est indépendante du roulement à billes. Elle se monte aisément sur l'élément de manoeuvre par emmanchement à force.

La présente invention permet notamment d'utiliser le même élément de manoeuvre dans le cas de dispositifs destinés à de petites ou grosses cylindrées. En effet, dans le cas de fortes puissances, il suffit d'éviter le contact métal-matière synthétique en mettant en place la plaque d'appui proposée par la présente invention.

D'autres avantages et caractéristiques de la présente invention ressortiront d'ailleurs de la description qui va suivre, à titre d'exemple, en référence aux dessins annexés sur lesquels:
- la figure 1 est une vue en demi-coupe d'une butée de débrayage munie d'une plaque d'appui, selon un mode de réalisation de la présente invention;
- la figure 2 est une vue en élévation de la plaque d'appui de la figure 1.

Une butée de débrayage 1 comprend notamment un élément de manoeuvre 2 et un roulement à billes 3.

L'élément de manoeuvre 2 est un manchon globalement cylindrique. Des nervures de guidage 5 sont ménagées sur sa face interne. Un rebord annulaire en saillie 6 s'étend radialement depuis la face externe du manchon approximativement au milieu de la longueur dudit élément.

Ce rebord 6 présente une face de poussée 7 contre laquelle est placée une plaque d'appui 30. Une bague annulaire 8 prolonge le rebord annulaire 6 à partir de la périphérie externe de celui-ci, en direction axiale, de façon que l'élément de manoeuvre 2 abrite la plus grande partie du roulement 3 montée à jeu radial dans la cavité délimitée par le manchon de l'élément de manoeuvre 2, le rebord 6 et la bague 8.

Le roulement à billes 3 comporte quant à lui une bague intérieure 10, une bague extérieure 11, une cage non référencée et des billes 12 insérées entre les bagues 10 et 11.

La bague extérieure 11 constitue la bague fixe du roulement à billes 3. Elle est appuyée, à la faveur d'un rebord radial non référence, contre la plaque d'appui 30, elle-même plaquée contre la face de poussée 7 de l'élément de manoeuvre. La bague intérieure 10, ici tournante, est profilée, de manière connue en soi, pour pouvoir agir sur le dispositif débrayeur de l'embrayage, usuellement le diaphragme d'un embrayage.

Le roulement à billes est mis en place sur l'élément de manoeuvre 2 depuis une extrémité de celui-ci, la bague intérieure 10 entourant à jeu radial la partie cylindrique dudit élément de manoeuvre et la bague extérieure 11 butant contre la plaque d'appui 30.

Une fourchette de commande 20, ici une fourchette de débrayage, dont chaque branche a une section globalement en U, vient appuyer contre la face du rebord annulaire 6 opposée à la face de poussée 7. Par l'intermédiaire de cette fourchette de commande, une poussée est classiquement imprimée à l'élément de manoeuvre 2 qui appuie sur le roulement à billes 3 pour amener celui-ci au contact d'un diaphragme de débrayage (non représenté), permettant ainsi le débrayage. L'élément de manoeuvre se déplace de manière connue le long d'un élément de guidage du type trompette de guidage, avec lequel il est en prise par l'intermédiaire des nervures de guidage 5.

Dans l'exemple décrit, l'élément de manoeuvre 2 est réalisé en matière synthétique, ici du type polyamide chargé en fibres de verre.

La plaque d'appui 30 est de forme globalement annulaire. Elle présente en son centre un perçage circulaire 31, qui permet de la mettre en place autour de la portion cylindrique de l'élément de manoeuvre 2, contre la face de poussée 7 du rebord annulaire 6. Elle est réalisée en feuillard métallique très mince communément appelé "clinquant".

Des pattes 32 en forme de dents sont ménagées à la périphérie externe de la plaque d'appui 30. Des encoches 33 sensiblement radiales sont pratiquées de part et d'autre de chaque patte 31. Lesdites pattes sont de telle longueur qu'elles dépassent légèrement du bord circulaire externe de la plaque d'appui 30, dont le diamètre est sensiblement égal au diamètre interne de la bague annulaire 8 du rebord 6.

La plaque d'appui 30 est mise en place par encliquetage sur l'élément de manoeuvre avant le montage du roulement à billes 3. Plus précisément, ladite plaque d'appui est enfoncée sur l'élément de manoeuvre 2 à l'aide d'une presse. La portion cylindrique de l'élément de manoeuvre 2 passe au travers du perçage 31 et les pattes 32 se plient et s'arc-boutent contre la bague annulaire 8. La plaque d'appui 30 se trouve ainsi immobilisée contre la face de poussée 7 de l'élément de manoeuvre 2.

La périphérie externe de la plaque d'appui 30 peut éventuellement être complètement dentelée. Les pattes 32 peuvent être prépliées avant montage.

La solution proposée par la présente invention permet d'éviter, de manière simple et peu coûteuse, le fluage qui nuit à l'autocentrage du dispositif. Elle permet notamment d'utiliser le même élément de manoeuvre, que le dispositif de débrayage, soit celui d'un véhicule de petite ou grosse cylindrée. Plus précisément, la butée d'embrayage qui vient d'être décrite peut être considérée comme un composant standardisé susceptible d'équiper des véhicules très différents. Pour des véhicules de grosse cylindrée, la présence de la plaque d'appui est indiquée, voire impérative. Pour des véhicules de petite cylindrée, la plaque d'appui peut être omise. La faible épaisseur de la plaque d'appui rend toute adaptation superflue.

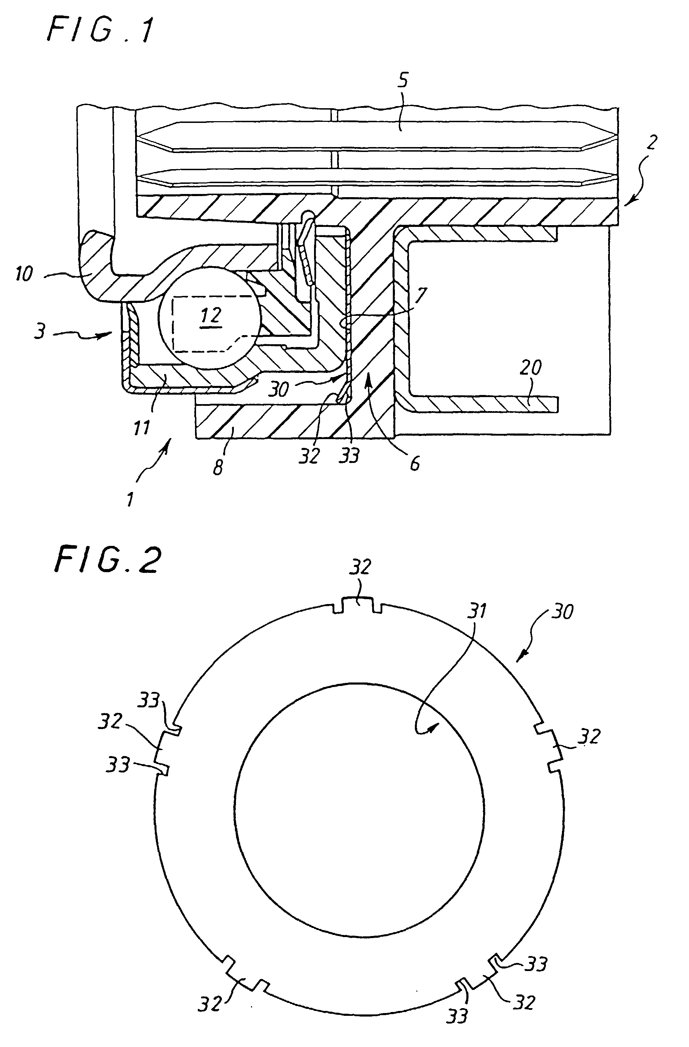

Ici la butée de débrayage 1 est au type de celle décrite dans le document FR-B-2 619 880 (figures 1 à 3). Ainsi, elle présente, au sein du roulement 3, une rondelle élastique non référencée portant sur le rebord radial métallique de la bague extérieure 11 et engagée dans une gorge non référencée pratiquée dans le manchon de l'élément de manoeuvre 2. Cette rondelle élastique a une forme de dièdre et est retournée lors du montage du roulement par une partie de montage appartenant à la cage du roulement.

Le roulement 3 peut ainsi se déplacer, de manière connue en soi, radialement pour autocentrage de la butée 1, contrôlé par ladite rondelle élastique sollicitant axialement le rebord radial de la bague 11 contre la plaque 30.

Bien entendu, la rondelle élastique peut être du type de celle des figures 4 à 6 de ce document FR-B-2 619 880 précité. On peut inverser les structures, la bague intérieure étant alors fixe tandis que la bague extérieure est mobile.

Dans ce cas, la bague intérieure présente un rebord radial dirigé vers l'extérieur pour appui sur la plaque d'appui.

On appréciera que le rebord annulaire 6 d'orientation transversale, a une forme plus simple que celui du document WO 89 0 2291 creusé pour montage de la plaque d'appui.

En outre contrairement à la solution décrite dans le document EP-A-0 047 584 cette plaque d'appui est indépendante du roulement à billes. Il n'y a pas besoin de prévoir des moyens de blocage en rotation de la plaque d'appui puisque cela est réalisé par grâce aux pattes 31 selon l'invention, qui viennent s'ancrer dans l'élément de manoeuvre 2.

De plus contrairement à la solution décrite dans le document DE-A-38 10 369 cette plaque d'appui ne traverse pas le rebord annulaire 6, qui ainsi n'est pas fragilisé.

Bien entendu, on peut raccourcir la longueur de la bague 8. Cette bague 8 dans ce cas peut être fractionnée en secteurs annulaires, dont le nombre dépend de celui des pattes 32.

On notera que la plaque d'appui 30 est d'un emploi universel la bague fixe du roulement à billes pouvant être dotée d'un rebord radial ou non.

## Revendications

1. Butée de débrayage (1) comportant un élément de manoeuvre (2) en matière synthétique présentant une face de poussée (7) en regard d'une bague fixe (11), d'un roulement à billes (3) et une plaque d'appui (30) mince, immobilisée sur ladite face de poussée (7) entre ladite bague (11) du roulement à billes et ledit élément de manoeuvre (2), caractérisée en ce que ladite plaque d'appui (30) présente des pattes (32), ménagées à sa périphérie externe, suffisamment flexibles pour se plier et se bloquer contre l'élément de manoeuvre (2).

2. Butée de débrayage selon la revendication 1, caractérisée en ce que les pattes (32) sont en forme de dents ménagées à la périphérie externe de la plaque d'appui (30).

3. Butée de débrayage selon la revendication 2, caractérisée en -ce que des encoches (33) radiales sont pratiquées de part et d'autre de chaque patte (32).

4. Butée de débrayage selon la revendication 2 ou 3, caractérisée en ce que la périphérie externe de ladite plaque d'appui (30) est complètement dentelée.

5. Butée de débrayage selon l'une quelconque des revendications 1 à 4, caractérisée en ce que la plaque d'appui (30) est réalisée en feuillard métallique très mince.

6. Butée de débrayage selon l'une quelconque des revendications 1 à 5, caractérisée en ce que les pattes (32) sont d'une longueur telle qu'elles dépassent légèrement du bord de la plaque d'appui (30).

7. Butée de débrayage selon l'une quelconque des revendications 1 à 6, caractérisée en ce que lesdites pattes (32) s'arc-boutent contre une bague annulaire (8) qui prolonge, en direction axiale, ladite face de poussée (7).

8. Butée de débrayage selon la revendication 7, dans lequel l'élément de manoeuvre (2) comporte un manchon cylindrique, caractérisée en ce que la plaque d'appui (30) est de forme globalement annulaire, en ce que la face de poussée (7) appartient à un rebord annulaire (6) saillant radialement depuis la face externe du manchon de l'élément de manoeuvre (2), ledit rebord (6) étant prolongé à sa périphérie externe par ladite bague annulaire (8), et en ce que le diamètre externe de la plaque d'appui (30) est sensiblement égal au diamètre interne de la bague annulaire (8) du rebord (6).

9. Butée de débrayage selon la revendication 8, caractérisée en ce que la plaque d'appui (30) est mise en place par encliquetage sur l'élément de manoeuvre (2) avant le montage du roulement à billes (3), les pattes (32) de ladite plaque s'arc-boutant contre la bague annulaire (8) de l'élément de manoeuvre (2).

## Claims

1. A clutch release bearing (1) comprising a manoeuvring element (2) of synthetic material, having a thrust face (7) in facing relationship with a fixed race (11) of a ball bearing (3), together with a thin application plate (30) which is immobilised on the said thrust face (7) between the said race (11) of the ball bearing and the said manoeuvring element (2),
characterised in that the said application plate (30) has lugs (32) formed at its outer periphery and flexible enough to bend and jam against the manoeuvring element (2).

2. A clutch release bearing according to Claim 1, characterised in that the lugs (32) are in the form of teeth formed at the outer periphery of the application plate (30).

3. A clutch release bearing according to Claim 2, characterised in that radial notches (33) are formed on either side of each lug (32).

4. A clutch release bearing (1) according to Claim 2 or Claim 3, characterised in that the outer periphery of the said application plate (30) is fully castellated.

5. A clutch release bearing according to any one of Claims 1 to 4, characterised in that the application plate (30) is made from very thin metal sheet.

6. A clutch release bearing according to any one of Claims 1 to 5, characterised in that the lugs (32) are of such a length that they extend slightly beyond the edge of the application plate.

7. A clutch release bearing according to any one of Claims 1 to 6, characterised in that the said lugs (32) are abutted against an annular sleeve element (8) which extends the said thrust face (7) in the axial direction.

8. A clutch release bearing according to Claim 7, in which the manoeuvring element (2) comprises a cylindrical sleeve, characterised in that the application plate (30) is of generally annular form, in that the thrust face (7) is part of an annular flange (6) which projects radially from the outer face of the sleeve of the manoeuvring element (2), the said flange (6) being extended at its outer periphery by the said annular sleeve element (8), and in that the outer diameter of the application plate (30) is substantially equal to the internal diameter of the annular sleeve element (8) of the flange (6).

9. A clutch release bearing according to Claim 8, characterised in that the application plate (30) is snap-fitted on the manoeuvring element (2) before the ball bearing (3) is fitted, the lugs (32) of the said plate being jammed against the annular sleeve element (8) of the manoeuvring element (2).

## Patentansprüche

1. Ausrücklager (1), umfassend ein Betätigungselement (2) aus Kunststoff, das eine Druckfläche (7) gegenüber einem feststehenden Ring (11) eines Kugellagers (3) aufweist, und eine dünne Andrückplatte (30), die auf der besagten Druckfläche (7) zwischen dem besagten Ring (11) des Kugellagers und dem besagten Betätigungselement (2) gesichert ist, **dadurch gekennzeichnet**, daß die besagte Andrückplatte (30) an ihrem äußeren Umfang angeordnete Ansätze (32) aufweist, die ausreichend flexibel sind, um sich zu biegen und am Betätigungselement (2) zu arretieren.

2. Ausrücklager nach Anspruch 1, **dadurch gekennzeichnet**, daß die Ansätze (32) in Form von Zähnen ausgeführt sind, die am äußeren Umfang der Andrückplatte (30) angeordnet sind.

3. Ausrücklager nach Anspruch 2, **dadurch gekennzeichnet**, daß beiderseits jedes Ansatzes (32) radiale Ausnehmungen (33) eingearbeitet sind.

4. Ausrücklager nach Anspruch 2 oder 3, **dadurch gekennzeichnet**, daß der äußere Umfang der besagten Andrückplatte (30) vollständig gezahnt ist.

5. Ausrücklager nach einem der Ansprüche 1 bis 4, **dadurch gekennzeichnet**, daß die Andrückplatte (30) aus einem sehr dünnen Metallblech ausgeführt ist.

6. Ausrücklager nach einem der Ansprüche 1 bis 5, **dadurch gekennzeichnet**, daß die Ansätze (32) eine Länge aufweisen, die so bemessen ist, daß sie etwas über die Kante der Andrückplatte überstehen.

7. Ausrücklager nach einem der Ansprüche 1 bis 6, **dadurch gekennzeichnet**, daß sich die besagten Ansätze (32) gegen einen Ring (8) stützen, der die besagte Druckfläche (7) in axialer Richtung verlängert.

8. Ausrücklager nach Anspruch 7, wobei das Betätigungselement (2) eine zylindrische Muffe umfaßt, **dadurch gekennzeichnet**, daß die Druckfläche (7) zu einer von der Außenfläche der Muffe des Betätigungselements (2) aus radial vorstehenden ringförmigen Randleiste (6) gehört, wobei die besagte Randleiste (6) an ihrem äußeren Umfang durch den besagten Ring (8) verlängert wird, und daß der Außendurchmesser der Andrückplatte (30) in etwa gleich dem Innendurchmesser des Rings (8) der Randleiste (6) ist.

9. Ausrücklager nach Anspruch 8, **dadurch gekennzeichnet**, daß die Andrückplatte (30) vor der Montage des Kugellagers (3) durch Verrasten am Betätigungselement (2) eingesetzt wird, wobei sich die Ansätze (32) der besagten Platte gegen den Ring (8) des Betätigungselements (2) stützen.
